# EUROPEAN PATENT APPLICATION

(11) **EP 4 761 262 A1**
(43) Date of publication of application: **17.06.2026**
(21) Application number: 25215716.9
(22) Date of filing: 13.11.2025
(51) Int. Cl.: H04N 23/661, H04N 23/667, H04N 23/69, H04N 23/695, H04N 23/90, H04N 23/61, H04N 23/611, H04N 7/18

(54) **CONTROL APPARATUS, CONTROL METHOD, AND PROGRAM**

(30) Priority: 11.12.2024 JP 2024216878
(71) Applicant: Canon Kabushiki Kaisha, Tokyo, 146-8501 (JP)
(72) Inventor: OKAZAKI, Masaru, Tokyo, 146-8501 (JP)
(74) Representative: Canon Europe Limited

(57) **Abstract**

A control apparatus sets a manual operation state for controlling at least one of pan, tilt, and zoom of an image capturing apparatus based on a manual operation by a user, sets an automatic tracking state for controlling at least one of pan, tilt, and zoom of the image capturing apparatus to track a subject identified from a video image obtained by the image capturing apparatus, and, in a case where the image capturing apparatus is selected as a predetermined image capturing apparatus to perform at least one of delivery and recording of the video image and the manual operation by the user is not detected for a predetermined period of time in a period in which the manual operation state is set, performs control to switch a state of the image capturing apparatus from the manual operation state to the automatic tracking state.

## Description

### Technical Field

The present disclosure relates to a control apparatus, a control method, and a program.

### BACKGROUND

Heretofore, an image capturing system that has a pan, tilt, and zoom (PTZ) function for an image capturing unit and includes a plurality of image capturing apparatuses (network cameras) configured to change an angle of view, image capturing setting values, and the like via a network interface or a serial interface has been implemented. Such an image capturing system can further include a controller that issues an instruction command to change the angle of view of each image capturing apparatus, image capturing setting values, and the like, and a switcher for selecting an output from a plurality of image capturing apparatuses to deliver and/or record video and/or audio content. Such an image capturing system is generally operated by one user.

Image capturing apparatuses (network cameras) having the PTZ function include an image capturing apparatus having an automatic tracking state mode for detecting and identifying a subject such as a person and automatically controlling PTZ of an image capturing unit along with a movement of the identified subject. Japanese Patent No. 6988146 describes a technique in which the above-described automatic tracking state and a manual tracking state in which PTZ control of the image capturing unit is performed based on a manual operation by a user can be set in an image capturing apparatus (network camera) having the PTZ function.

Japanese Patent No. 6988146 describes a technique for constantly detecting a tracking target in a video image so that the tracking state can be immediately switched to the automatic tracking state even when the manual tracking state is set.

However, the technique described in Japanese Patent No. 6988146 is based on the assumption that a single user operates a single image capturing apparatus, and does not consider that a single user operates a plurality of image capturing apparatuses. Thus, the technique described in Japanese Patent No. 6988146 has an issue that it is difficult for a user to perform an appropriate operation in a case where the user performs an operation by switching a predetermined image capturing apparatus among a plurality of image capturing apparatuses to deliver or record a video image.

### SUMMARY

The present disclosure has been made in view of the above-described issue and is directed to enabling a user to perform an appropriate operation in a case where the user performs an operation by switching a predetermined image capturing apparatus among a plurality of image capturing apparatuses to deliver and/or record video and/or audio content.

The present disclosure in its first aspect provides a control apparatus as specified in claim 1. Optional features are specified in claims 2 to 8.

The present disclosure in its second aspect provides a control method as specified in claim 9.

The present disclosure in its third aspect provides a program as specified in claim 10.

Features of the present disclosure will become apparent from the following description of embodiments with reference to the attached drawings. The following description of embodiments is described by way of example.

### BRIEF DESCRIPTION OF THE DRAWINGS

Fig. 1 illustrates an example of a schematic configuration of an image capturing system according to a first embodiment.
Fig. 2 is a block diagram illustrating a hardware configuration example of a network camera (image capturing apparatus) according to the first embodiment.
Fig. 3 is a block diagram illustrating a functional configuration example of the network camera (image capturing apparatus) according to the first embodiment.
Fig. 4 is a block diagram illustrating a hardware configuration example of a switcher according to the first embodiment.
Fig. 5 illustrates an example of a timing diagram related to control of a plurality of network cameras according to a comparative example.
Fig. 6 illustrates an example of a timing diagram related to control of a plurality of network cameras according to the first embodiment.
Fig. 7 is a flowchart illustrating an example of a processing procedure in a control method of the network camera (image capturing apparatus) according to the first embodiment.
Fig. 8 is a flowchart illustrating an example of a detailed processing procedure for pan, tilt, and zoom (PTZ) tracking target identification processing in step S711 illustrated in Fig. 7.
Fig. 9 illustrates an example of a timing diagram related to control of a plurality of network cameras according to a second embodiment.
Fig. 10 is a flowchart illustrating an example of a processing procedure in a control method of the network camera (image capturing apparatus) according to the second embodiment.
Figs. 11A1 and 11A2 are flowcharts illustrating an example of a processing procedure in a control method of a network camera (image capturing apparatus) according to a third embodiment. Fig. 11B is a flowchart illustrating an example of a processing procedure in a control method of a video controller according to the third embodiment.
Fig. 12 illustrates an example of a timing diagram related to control of a plurality of network cameras according to a fourth embodiment.
Fig. 13 is a flowchart illustrating an example of a processing procedure in a control method of the network camera (image capturing apparatus) according to the fourth embodiment.

### DESCRIPTION OF THE EMBODIMENTS

Embodiments for carrying out the present disclosure will be described below with reference to the drawings.

### (First Embodiment)

A first embodiment will now be described.

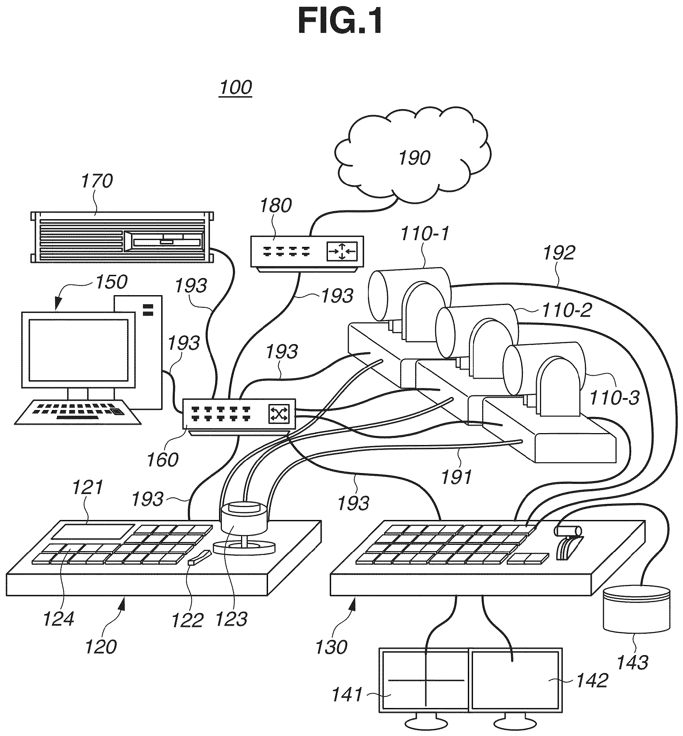

Fig. 1 illustrates a schematic configuration example of an image capturing system 100 according to the first embodiment.

As illustrated in Fig. 1, the image capturing system 100 includes network cameras 110-1 to 110-3, each of which corresponds to an image capturing apparatus according to the first embodiment, a video controller 120, a switcher 130, a display 141, a display 142, and a video image storage 143. The image capturing system 100 also includes a personal computer 150, a Power over Ethernet (PoE) hub 160, a video recording server 170, a router 180, and the Internet 190. The image capturing system 100 further includes an RS-422 serial communication cable 191, a coaxial (serial digital interface (SDI)) cable 192, and an unshielded twisted pair (UTP) cable 193.

In the image capturing system 100 illustrated in Fig. 1, three network cameras (image capturing apparatuses) 110-1 to 110-3 are illustrated as a plurality of network cameras (image capturing apparatuses) 110 to be operated by a user. However, the first embodiment is not limited to this example. For example, the image capturing system 100 according to the present embodiment may include two network cameras (image capturing apparatuses) 110, or may include four or more network cameras (image capturing apparatuses) 110. In the following description, in the case of describing matters that are common to the network cameras (image capturing apparatuses) 110-1 to 110-3 illustrated in Fig. 1, the network cameras (image capturing apparatuses) 110-1 to 110-3 are simply referred to as the network camera (image capturing apparatus) 110.

The network camera 110 receives control information (e.g., angle-of-view variation information such as pan, tilt, and zoom of an image capturing unit, and camera setting information) from the video controller 120 via the RS-422 serial communication cable 191, and is controlled by the video controller 120. The network camera 110 transmits video image information obtained through a lens to the switcher 130 via the coaxial (SDI) cable 192. The switcher 130 transmits the selected video image information to the video image storage 143 and the video recording server 170 to accumulate video image information. In the first embodiment, audio information obtained by the network camera 110 is also accumulated in the video image storage 143 or the video recording server 170 via the coaxial (SDI) cable 192 and the switcher 130. When each apparatus is compatible with high-definition multimedia interface (HDMI^{®}), each apparatus may establish a connection not via the coaxial (SDI) cable 192, but via an HDMI^{®} cable and may communicate the above-described video image information and audio information as uncompressed video image data.

The video controller 120 transmits control information to the network camera 110 via the RS-422 serial communication cable 191 to control the network camera 110.

As illustrated in Fig. 1, the video controller 120 includes a liquid crystal display (LCD) 121, a rocker switch 122, a joystick 123, and buttons 124. The LCD 121 is a display unit for displaying the current state of the video controller 120, setting information, and the like. The rocker switch 122 is an operation unit for the user to perform a zoom operation on the network camera 110 to be controlled. The joystick 123 is an operation unit for the user to perform a pan/tilt operation on the network camera 110 to be controlled. Each button 124 is an operation unit for the user to perform an operation to invoke preset information and invoke other functions. The video controller 120 may transmit the above-described control information to the network camera 110 via a network (Ethernet) using the UTP cable 193 instead of using the RS-422 serial communication cable 191.

The switcher 130 transmits video image information (that can include audio information) from the network camera 110, which is selected as a predetermined image capturing apparatus (hereinafter referred to as PGM) to perform at least one of delivery and recording of a video image, to the video image storage 143 or the video recording server 170, and accumulates the video image information.

The display 141 is a display device that displays and outputs video images based on video image information input from the plurality of network cameras 110-1 to 110-3 via the switcher 130 in such a manner that the video images are arranged side by side on a screen. The display 142 is a display device that displays and outputs video images based on video image information input from the network camera 110 selected as the predetermined image capturing apparatus (PGM) by the switcher 130. In the first embodiment, the video image information about the video images displayed and output on the display 142 is stored in the video image storage 143 and the video recording server 170.

The personal computer 150 is, for example, a computer that is used, as needed, by the user.

The PoE hub 160 is connected to the network camera 110, the video controller 120, the switcher 130, the personal computer 150, the video recording server 170, and the router 180 via the UTP cable (local area network (LAN) cable) 193. The network camera 110 receives power supplied from the PoE hub 160 via the UTP cable 193. The PoE hub 160 is connected to the Internet 190 via the router 180, so that video image information can be delivered and accumulated in servers and client devices on the Internet 190.

The video recording server 170 is connected to the PoE hub 160 via the UTP cable 193, so that video image information input from the plurality of network cameras 110-1 to 110-3 can be stored in the storage of the video recording server 170.

The router 180 is connected to the Internet 190.

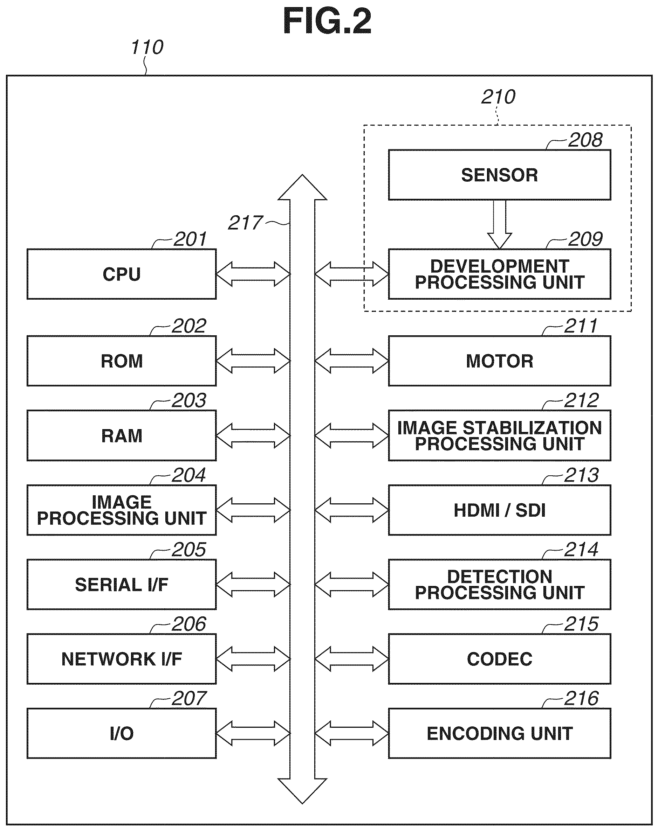

Fig. 2 is a block diagram illustrating a hardware configuration example of the network camera (image capturing apparatus) 110 according to the first embodiment.

As illustrated in Fig. 2, the network camera 110 includes, as hardware components, a central processing unit (CPU) 201, a read-only memory (ROM) 202, a random-access memory (RAM) 203, an image processing unit 204, a serial interface (I/F) 205, a network I/F 206, and an input/output (I/O) unit 207. The network camera 110 also includes, as hardware components, a sensor 208, a development processing unit 209, a motor 211, an image stabilization processing unit 212, an HDMI^{®}/SDI controller 213, a detection processing unit 214, a coder/decoder (CODEC) 215, an encoding unit 216, and a bus 217. As illustrated in Fig. 2, the sensor 208 and the development processing unit 209 constitute an image capturing unit 210 in the network camera 110. In the first embodiment, the image capturing unit 210 includes the sensor 208 and the development processing unit 209, and may also include, for example, the image processing unit 204.

The CPU 201 is a processor that controls the overall operation of the network camera 110 and performs various processing. The ROM 202 is a non-volatile memory that stores programs and an operating system (OS) for the CPU 201 to control the overall operation of the network camera 110 and perform various processing, and also stores various information (including data). The RAM 203 is a memory that temporarily holds programs to be executed by the CPU 201, various information (including data), and the like.

The image processing unit 204 is a constituent unit that performs image processing.

The serial I/F 205 is a constituent unit that communicates with an external device (e.g., video controller 120) via the RS-422 serial communication cable 191. The network I/F 206 is a constituent unit that communicates with an external device via a network. The I/O unit 207 is, for example, a constituent unit for inputting and outputting various information (including data) to and from an external device.

The sensor 208 is a photoelectric conversion sensor that converts light having passed through the lens of the network camera 110 into an electrical signal. The development processing unit 209 is, for example, a constituent unit that performs development processing on the electrical signal obtained by the sensor 208 and generates video image information. As described above, the sensor 208 and the development processing unit 209 constitute the image capturing unit 210 in the network camera 110. The image capturing unit 210 may further include, for example, the image processing unit 204.

The motor 211 is a motor for performing a pan, tilt, and zoom driving operation, a focal point (focus) driving operation, and an aperture driving operation for the image capturing unit 210. The image stabilization processing unit 212 is a constituent unit that incorporates, for example, a gyroscope sensor to perform image stabilization processing on the network camera 110.

The HDMI^{®}/SDI controller 213 is an HDMI^{®} or SDI controller that directly outputs video image information (that can also include audio information) in an uncompressed form to an external device. The detection processing unit 214 performs processing for detecting an object to be focused from video image information, processing for continuously detecting an object while performing PTZ control by the network camera 110 and automatically tracking the object, and the like. The CODEC 215 is a constituent unit for compressing and decompressing video image information (that can also include audio information) in a predetermined format. The encoding unit 216 is a constituent unit that encodes (encoding, image compression) video image information (that can also include audio information) by an encoding method required for delivery such as Joint Photographic Experts Group (JPEG), H.264, or High Efficiency Video Coding (HEVC). In the first embodiment, the encoding unit 216 may be included as an internal component of the CODEC 215.

The bus 217 is a bus for connecting the constituent units (201 to 209 and 211 to 216) of the network camera 110 so that the constituent units can communicate with each other.

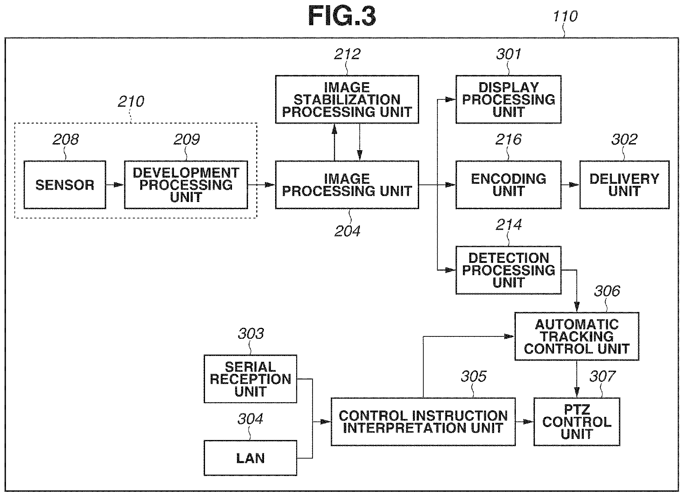

Fig. 3 is a block diagram illustrating a functional configuration example of the network camera (image capturing apparatus) 110 according to the first embodiment. In Fig. 3, constituent elements similar to those illustrated in Fig. 2 are denoted by the same reference numerals, and detailed descriptions thereof are omitted. Specifically, Fig. 3 mainly illustrates a processing flow for the network camera 110 from the generation of one frame of a video image to the delivery and display of the generated frame, and also illustrates a flow of subject automatic tracking processing to be executed by the image capturing unit 210.

As illustrated in Fig. 3, the network camera 110 includes functional components of the image processing unit 204, the sensor 208, the development processing unit 209, the image stabilization processing unit 212, the detection processing unit 214, and the encoding unit 216, which are illustrated in Fig. 2. The network camera 110 also includes functional components of a display processing unit 301, a delivery unit 302, a serial reception unit 303, a LAN 304, a control instruction interpretation unit 305, an automatic tracking control unit 306, and a PTZ control unit 307.

The display processing unit 301 illustrated in Fig. 3 is composed of, for example, the HDMI^{®}/SDI controller 213 illustrated in Fig. 2. The delivery unit 302 and the LAN 304 illustrated in Fig. 3 are each composed of, for example, the network I/F 206 illustrated in Fig. 2. The serial reception unit 303 illustrated in Fig. 3 is composed of, for example, the serial I/F 205 illustrated in Fig. 2. The control instruction interpretation unit 305, the automatic tracking control unit 306, and the PTZ control unit 307 illustrated in Fig. 3 are implemented by the CPU 201 illustrated in Fig. 2 executing programs stored in the ROM 202.

First, the sensor 208 converts light having passed through the lens of the image capturing unit 210 into an electrical signal (image signal). The image signal obtained at this stage is red, green, and blue (RGB) data. The development processing unit 209 converts RGB data corresponding to the electrical signal (image signal) obtained by the sensor 208 into luminance/color difference information (YCbCr) serving as video image information. To reduce the amount of video image information, the development processing unit 209 may reduce the amount of color difference information and convert the color difference information to YCbCr 4:2:0.

Next, the image processing unit 204 performs image processing such as noise reduction processing and resolution conversion processing on the luminance/color difference information (YCbCr) serving as video image information generated by the development processing unit 209. In this case, before resolution conversion processing is performed on the video image information by the image processing unit 204, image stabilization processing may be performed, as needed, by the image stabilization processing unit 212. In this case, the image processing unit 204 is configured to perform resolution conversion processing on the video image information obtained as a result of image stabilization processing by the image stabilization processing unit 212. Examples of resolution conversion processing to be performed by the image processing unit 204 include detection/recognition processing and conversion processing for converting information into a plurality of sizes suitable for display and delivery for the video image information.

In this conversion processing, video image information having a plurality of resolutions may be generated in one pass, or resolution conversion processing may be performed a plurality of times through time division and video image information having a plurality of resolutions may be generated.

Next, the display processing unit 301 performs processing for displaying a video image based on video image information with an appropriate size obtained by resolution conversion processing by the development processing unit 209. The video image to be displayed by the display processing unit 301 may be displayed on a display (not illustrated) incorporated in the network camera 110. In the video image display processing performed by the display processing unit 301, an uncompressed video image may be transmitted via an output interface, such as the HDMI^{®}/SDI controller 213 illustrated in Fig. 2, and the video image may be displayed on a television set or a display.

The encoding unit 216 performs encoding (e.g., image compression) by an encoding method required for delivery such as JPEG, H.264, or HEVC using video image information with an appropriate size obtained by resolution conversion processing by the development processing unit 209. The delivery unit 302 delivers the video image information encoded by the encoding unit 216. In this case, the delivery unit 302 may also deliver audio information together with video image information using a mechanism for synchronizing the audio information with the video image information.

The detection processing unit 214 performs moving object detection, object detection, face detection, face authentication, and the like on a video image based on video image information by using video image information with an appropriate size for detection/authentication processing performed in the resolution conversion processing by the image processing unit 204.

The serial reception unit 303 and the LAN 304 receive a PTZ control instruction from the video controller 120 illustrated in Fig. 1. The control instruction interpretation unit 305 interprets the PTZ control instruction received by the serial reception unit 303 and the LAN 304. The PTZ control unit 307 performs PTZ control (control of at least one of pan, tilt, and zoom) for the image capturing unit 210 based on the PTZ control instruction interpreted by the control instruction interpretation unit 305.

When an automatic tracking state is set as the state of the network camera 110, the automatic tracking control unit 306 holds statistical information obtained as a result of detection by the detection processing unit 214, and tracks the movement of a subject as a tracking target within a detection result screen. The automatic tracking control unit 306 issues a PTZ control instruction to the PTZ control unit 307 so that the tracking target subject falls within a certain angle of view at a certain position within the screen.

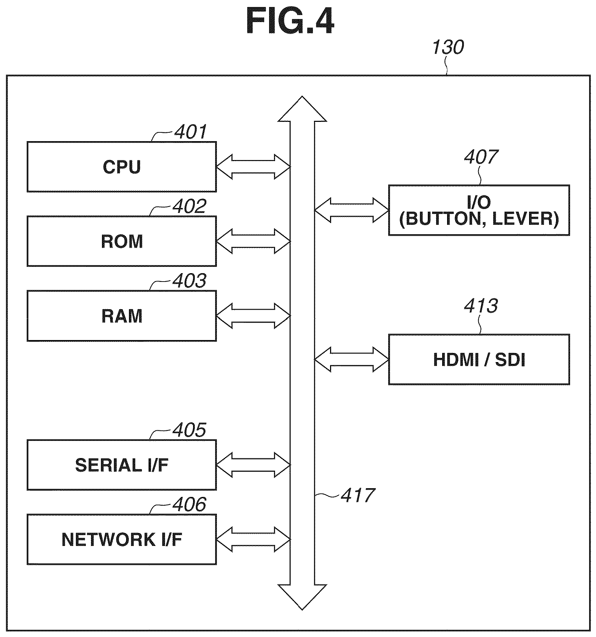

Fig. 4 is a block diagram illustrating a hardware configuration example of the switcher 130 according to the first embodiment.

As illustrated in Fig. 4, the switcher 130 includes, as hardware components, a CPU 401, a ROM 402, a RAM 403, a serial I/F 405, and a network I/F 406. The switcher 130 also includes, as hardware components, an I/O unit 407, an HDMI^{®}/SDI interface 413, and a bus 417.

The CPU 401 is a processor that performs overall controls of the switcher 130 and performs various processing. The ROM 402 is a non-volatile memory that stores programs and an OS for the CPU 401 to perform overall control of the switcher 130 and perform various processing, and stores various information (including data). The RAM 403 is a memory that temporarily holds programs to be executed by the CPU 401, various information (including data), and the like.

The serial I/F 405 is a constituent unit that establishes serial communication with an external device. The network I/F 406 is a constituent unit that communicates with an external device (e.g., network camera 110) via a network. The I/O unit 407 is, for example, a constituent unit for inputting and outputting various information (including data) to and from an external device. Examples of the I/O unit 407 include a button and a lever to be operated by the user. Examples of the button included in the I/O unit 407 include a button for selecting the network camera 110 selected as the PGM during delivery and/or recording of the current video image. Examples of the button included in the I/O unit 407 also include a button for selecting the preset (PST) network camera 110 to be used for subsequent delivery and/or recording. Examples of the button included in the I/O unit 407 also include a button for selecting a transition and selecting a preset. Examples of the lever included in the I/O unit 407 include a lever for adjusting the transition.

The HDMI^{®}/SDI interface 413 is an HDMI^{®} or SDI interface that receives video image information (that can also include audio information) from the network camera 110.

The bus 417 is a bus for connecting the constituent units (401 to 403, 405 to 407, and 413) of the switcher 130 so that the constituent units can communicate with each other.

In the first embodiment, the video controller 120 illustrated in Fig. 1 may also have a hardware configuration similar to, for example, the hardware configuration of the switcher 130 illustrated in Fig. 4.

Next, a PTZ control state of the network camera 110 will be described.

**[Table 1]**

| | |
|---|---|
| Camera PTZ Control State (10) | No-PTZ-Operation State (11) |
| | PTZ Manual Operation State (12) |
| | PTZ Automatic Tracking State (13) |

As illustrated in Table 1, in the first embodiment, examples of a PTZ control state 10 of the network camera 110 include a no-PTZ-operation state 11, a PTZ manual operation state 12, and a PTZ automatic tracking state 13. The no-PTZ-operation state 11 indicates a state where, for example, no user operation on PTZ of the network camera 110 (image capturing unit 210) is performed. The PTZ manual operation state 12 indicates a state where, for example, the user performs a manual operation on PTZ of the network camera 110 (image capturing unit 210) via the video controller 120.

The PTZ automatic tracking state 13 indicates a state where, for example, the CPU 201 performs PTZ control of the image capturing unit 210 so that the subject identified from the video image obtained by the network camera 110 (image capturing unit 210) can be tracked.

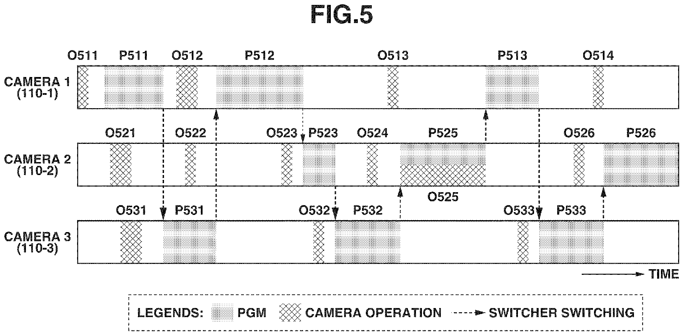

Fig. 5 illustrates an example of a timing diagram related to control of the plurality of network cameras 1 to 3 (110-1 to 110-3) according to a comparative example.

In the timing diagram according to the comparative example illustrated in Fig. 5, the horizontal axis indicates an elapsed time and the vertical axis indicates an operation state of each of the network cameras 1 to 3 (110-1 to 110-3). In the timing diagram according to the comparative example illustrated in Fig. 5, the operation state of each of the network cameras 1 to 3 (110-1 to 110-3) is indicated in legends. In the legends illustrated in Fig. 5, "PGM" represents the state of the network camera 110 selected as a predetermined image capturing apparatus to perform at least one of delivery and recording of a video image by the switcher 130. In the legends illustrated in Fig. 5, "Camera Operation" represents a state where one or more users manually operate the network camera 110 and corresponds to the PTZ manual operation state 12 illustrated in Table 1 described above. In the legends illustrated in Fig. 5, "Switcher Switching" represents a selection switching timing of the predetermined image capturing apparatus (PGM) to perform at least one of delivery and recording by the switcher 130.

In the timing diagram according to the comparative example illustrated in Fig. 5, for example, in the network camera 1 (110-1), a period O512 is a period in which the user performs an operation (that can include an exposure operation or the like) related to PTZ via the video controller 120. For example, in the network camera 1 (110-1), a period P512 is a period in which the network camera 1 (110-1) is selected as the predetermined image capturing apparatus (PGM) to perform at least one of delivery and recording of the video image by the switcher 130.

In the timing diagram according to the comparative example illustrated in Fig. 5, at the end of the period P512, the network camera 2 (110-2) is selected as the predetermined image capturing apparatus (PGM) by the switcher 130. In the network camera 2 (110-2), a period P523 is a period in which the network camera 2 (110-2) is selected as the predetermined image capturing apparatus (PGM) to perform at least one of delivery and recording of the video image by the switcher 130.

Further, in the timing diagram according to the comparative example illustrated in Fig. 5, in the network camera 2 (110-2), a period P525 is a period in which the network camera 2 (110-2) is selected as the predetermined image capturing apparatus (PGM) to perform at least one of delivery and recording of the video image. In the timing diagram according to the comparative example illustrated in Fig. 5, a problem may occur in a case where the user performs an operation via the video controller 120 as indicated by a period O525 during the period in which the network camera 2 (110-2) is selected as the predetermined image capturing apparatus (PGM) in the period P525. Specifically, in the timing diagram according to the comparative example illustrated in Fig. 5, a problem may occur that the user cannot operate the network cameras 1 and 3 (110-1 and 110-3) other than the network camera 2 (110-2) during the period P525 and the period O525. Accordingly, in the timing diagram according to the comparative example illustrated in Fig. 5, the user cannot adjust the angle of view by performing a PTZ operation on the preset (PST) network camera 110 to be used for subsequent delivery and/or recording.

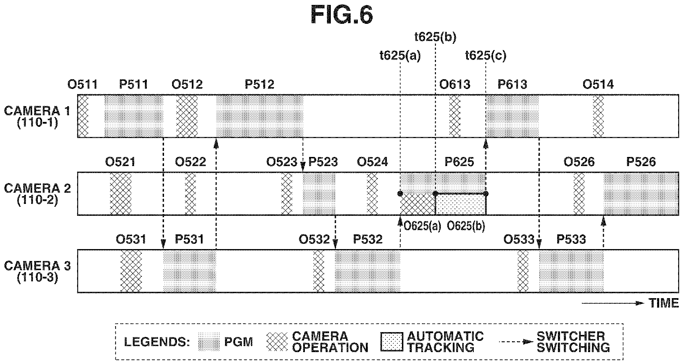

Fig. 6 illustrates an example of a timing diagram related to control of the plurality of network cameras 1 to 3 (110-1 to 110-3) according to the first embodiment. In Fig. 6, constituent elements similar to those illustrated in Fig. 5 are denoted by the same reference numerals or the like, and detailed descriptions thereof are omitted.

In the timing diagram according to the first embodiment illustrated in Fig. 6, for example, the network camera 2 (110-2) is focused.

In the timing diagram for the network camera 2 (110-2) illustrated in Fig. 6, the user performs an operation (that can include an exposure operation or the like) related to PTZ (that is, the angle of view) via the video controller 120 during a period O523. Next, in the timing diagram for the network camera 2 (110-2) illustrated in Fig. 6, the network camera 2 (110-2) is selected as the predetermined image capturing apparatus (PGM) by the switcher 130 to perform at least one of delivery and recording of the video image, during the period P523.

Thereafter, in the timing diagram according to the first embodiment illustrated in Fig. 6, at the end of the period P523, the network camera 3 (110-3) is selected as the predetermined image capturing apparatus (PGM) by the switcher 130. The network camera 3 (110-3) illustrated in Fig. 6 thereby performs at least one of delivery and recording of the video image during the period P532.

In this case, in the network camera 3 (110-3) illustrated in Fig. 6, the angle of view and the exposure during period P532 are adjusted by the user during the period O532 prior to the period P532.

In the timing diagram according to the first embodiment illustrated in Fig. 6, the network camera 2 (110-2) is selected as the predetermined image capturing apparatus (PGM) by the switcher 130 at the end of the period P532. Thereafter, in the network camera 2 (110-2), at least one of delivery and recording of the video image with the angle of view adjusted during a period O524 is started. In the network camera 2 (110-2), the no-PTZ-operation state 11 is set prior to time t625(a), and the PTZ manual operation state 12 is set during a period O625(a). The PTZ automatic tracking state 13 is set during a period O625(b).

In this case, from time t625(a) when the period O625(a) is started, the user uses the joystick 123 of the video controller 120 to perform a tracking operation such that a change in the position of the moving subject within the imaging angle of view in the network camera 2 (110-2) can be minimized. The network camera 2 (110-2) performs object detection processing during the period (period O625(a)) in which the user is performing the PTZ operation during a period P625 in which the network camera 2 (110-2) is selected as the predetermined image capturing apparatus (PGM), and also performs processing for identifying the object, the position of which within a captured image has not changed. Then, the network camera 2 (110-2) determines the identified object to be the automatic tracking target subject.

The user confirms that the automatic tracking target subject has been determined in the network camera 2 (110-2), and then stops the operation of the video controller 120 at start time t625(b) of the period O625(b). The network camera 2 (110-2) then detects that the operation of the video controller 120 has stopped, and switches the state of the network camera 2 (110-2) from the PTZ manual operation state 12 to the PTZ automatic tracking state 13. In the network camera 2 (110-2) whose state has been switched to the PTZ automatic tracking state 13, the object determined to be the automatic tracking target subject is automatically tracked. Specifically, in the timing diagram illustrated in Fig. 6, after time t625(b) when the network camera 2 (110-2) is switched to the PTZ automatic tracking state 13, the user can operate the other network cameras 1 and 3 (110-1 and 110-3). For example, as indicated by a period O613 illustrated in Fig. 6, the user can operate the network camera 1 (110-1) when the network camera 2 (110-2) is in the PTZ automatic tracking state 13.

Thereafter, in the timing diagram according to the first embodiment illustrated in Fig. 6, the predetermined image capturing apparatus (PGM) is switched to the network camera 1 (110-1) by the switcher 130 at time t625(c). In the network camera 1 (110-1) selected as the predetermined image capturing apparatus (PGM), at least one of delivery and recording of the video image captured with the angle of view set during the period O613 is performed during a period P613.

In contrast, in the network camera 2 (110-2), there is no need to deliver or record the video image after time t625(c), and thus the subject automatic tracking operation is stopped and then the network camera 2 (110-2) transitions to the PTZ manual operation state 12 again. Specifically, the network camera 2 (110-2) stops the subject automatic tracking operation and transitions to the PTZ manual operation state 12 in response to a PGM OFF notification from the video controller 120.

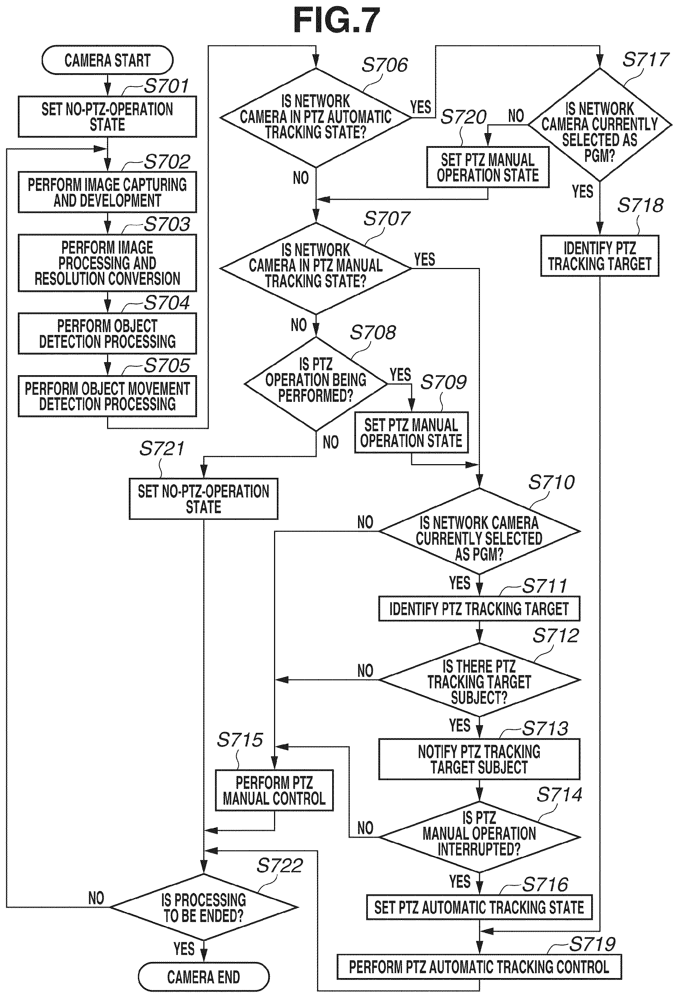

Fig. 7 is a flowchart illustrating an example of a processing procedure in a control method of the network camera (image capturing apparatus) 110 according to the first embodiment. Specifically, Fig. 7 mainly illustrates processing during the period from time t625(a) to time t625(c) in the network camera 2 (110-2) illustrated in Fig. 6.

First, in step S701 illustrated in Fig. 7, the CPU 201 of the network camera (image capturing apparatus) 110 sets the no-PTZ-operation state 11 as an initial state.

In step S702 illustrated in Fig. 7, the CPU 201 causes the image capturing unit 210 to perform image capturing and development processing. Specifically, in step S702 illustrated in Fig. 7, the sensor 208 performs image capturing by converting light that has passed through the lens of the image capturing unit 210 into an electrical signal, and the development processing unit 209 performs development processing on the electrical signal obtained by the sensor 208 to generate video image information.

In step S703 illustrated in Fig. 7, the CPU 201 causes the image processing unit 204 to perform image processing and resolution conversion processing. Specifically, in step S703 illustrated in Fig. 7, the image processing unit 204 performs image processing including noise reduction and resolution conversion processing under preliminarily set conditions on the video image information obtained by the image capturing unit 210.

In step S704 illustrated in Fig. 7, the CPU 201 causes the detection processing unit 214 to perform object detection processing. Specifically, in step S704 illustrated in Fig. 7, the detection processing unit 214 performs processing for detecting an object from the video image information obtained by the image capturing unit 210.

In step S705 illustrated in Fig. 7, the CPU 201 causes the detection processing unit 214 to perform object movement detection processing. Specifically, in step S705 illustrated in Fig. 7, the detection processing unit 214 performs processing for detecting the movement of the object from the video image information obtained by the image capturing unit 210.

In step S706 illustrated in Fig. 7, the CPU 201 determines whether the network camera 110 to which the CPU 201 belongs is in the PTZ automatic tracking state 13.

In step S706 illustrated in Fig. 7, in a case where the CPU 201 determines that the network camera 110 is not in the PTZ automatic tracking state 13 (NO in step S706), the processing proceeds to step S707. For example, in the timing diagram for the network camera 2 (110-2) illustrated in Fig. 6, the no-PTZ-operation state 11 is set at time t625(a), and thus the processing proceeds to step S707.

In step S707 illustrated in Fig. 7, the CPU 201 determines whether the network camera 110 is in the PTZ manual operation state 12.

In step S707 illustrated in Fig. 7, if the CPU 201 determines that the network camera 110 to which the CPU 201 belongs is not in the PTZ manual operation state 12 (NO in step S707), the processing proceeds to step S708. For example, in the timing diagram for the network camera 2 (110-2) illustrated in Fig. 6, the no-PTZ-operation state 11 is set at time t625(a), and thus the processing proceeds to step S708.

In step S708 illustrated in Fig. 7, the CPU 201 determines whether the PTZ operation is being performed.

In step S708 illustrated in Fig. 7, in a case where the CPU 201 determines that the PTZ operation is being performed (YES in step S708), the processing proceeds to step S709. For example, in the timing diagram for the network camera 2 (110-2) illustrated in Fig. 6, the PTZ operation is started (PTZ operation is being performed) at time t625(a), and thus the processing proceeds to step S709.

In step S709 illustrated in Fig. 7, the CPU 201 sets the PTZ manual operation state 12 as the state of the network camera 110 to which the CPU 201 belongs. The CPU 201 that performs processing for setting the PTZ manual operation state 12 in step S709 constitutes a "first state setting unit" according to the first embodiment.

After the processing of step S709 illustrated in Fig. 7 is finished, the processing proceeds to step S710. In step S707 illustrated in Fig. 7, in a case where the CPU 201 determines that the network camera 110 to which the CPU 201 belongs is in the PTZ manual operation state 12 (YES in step S707), the processing also proceeds to step S710. For example, in the timing diagram for the network camera 2 (110-2) illustrated in Fig. 6, the PTZ manual operation state 12 is set at any time during the period O625(a), and thus the processing proceeds to step S710.

In step S710 illustrated in Fig. 7, the CPU 201 determines whether the network camera 110 to which the CPU 201 belongs is selected as the predetermined image capturing apparatus (PGM).

In step S710 illustrated in Fig. 7, in a case where the CPU 201 determines that the network camera 110 to which the CPU 201 belongs is selected as the predetermined image capturing apparatus (PGM) (YES in step S710), the processing proceeds to step S711. For example, in the timing diagram for the network camera 2 (110-2) illustrated in Fig. 6, the network camera 2 (110-2) is selected as the predetermined image capturing apparatus (PGM) at time t625(a) or at any time during the period O625(a), and thus the processing proceeds to step S711.

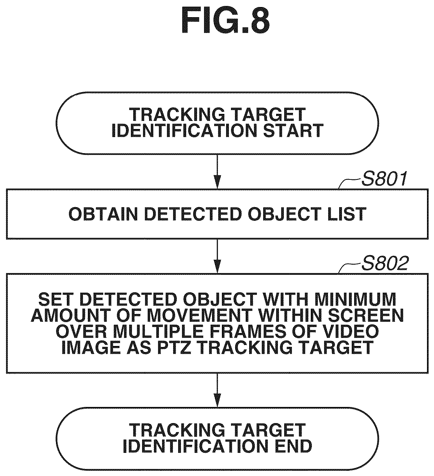

In step S711 illustrated in Fig. 7, the CPU 201 identifies a PTZ tracking target subject. The CPU 201 that performs processing for identifying the PTZ tracking target subject in step S711 constitutes an "identification unit" according to the present embodiment. Detailed processing in step S711 illustrated in Fig. 7 will be described with reference to Fig. 8.

Fig. 8 is a flowchart illustrating an example of a detailed processing procedure for PTZ tracking target identification processing in step S711 illustrated in Fig. 7.

When the processing of step S711 illustrated in Fig. 7 is started, first, in step S801 illustrated in Fig. 8, the CPU 201 (automatic tracking control unit 306) obtains a list of objects detected by the detection processing unit 214. Next, in step S802 illustrated in Fig. 8, the CPU 201 (automatic tracking control unit 306) identifies a detected object with a minimum amount of movement within the screen over a plurality of frames of the video image among the detected objects in the list obtained in step S801 as the PTZ tracking target subject. This is because it can be considered that the amount of movement of the tracking target subject within the captured image is minimum when the user is tracking the tracking target subject by the PTZ manual operation via the video controller 120. Accordingly, the processing of step S802 illustrated in Fig. 8 makes it possible to identify the tracking target subject.

After the processing of step S802 illustrated in Fig. 8 is finished, the processing in the flowchart illustrated in Fig. 8 ends. As a result, the processing of step S711 illustrated in Fig. 7 ends.

Referring again to Fig. 7, the description of the flowchart illustrated in Fig. 7 will be continued.

After the processing of step S711 illustrated in Fig. 7 is finished, the processing proceeds to step S712.

In step S712 illustrated in Fig. 7, the CPU 201 (automatic tracking control unit 306) determines whether there is a tracking target subject identified in step S711.

In step S712 illustrated in Fig. 7, in a case where the CPU 201 determines that there is a tracking target subject identified in step S711 (YES in step S712), the processing proceeds to step S713.

In step S713 illustrated in Fig. 7, the CPU 201 notifies the user of the PTZ tracking target subject. Examples of the notification method in step S713 include a method of superimposing a colored frame on the tracking target subject as a preview video image stream, and a method of notifying the user of detected coordinates and size using another network protocol to superimpose detected information on a user preview screen.

After the processing of step S713 illustrated in Fig. 7 is finished, the processing proceeds to step S714.

In step S714 illustrated in Fig. 7, the CPU 201 determines whether the PTZ manual operation by the user is not detected for a predetermined period of time and the PTZ manual operation is interrupted.

In step S714 illustrated in Fig. 7, in a case where the CPU 201 determines that the PTZ manual operation by the user is detected for the predetermined period of time and the PTZ manual operation is not interrupted (NO in step S714), the processing proceeds to step S715. For example, in the timing diagram for the network camera 2 (110-2) illustrated in Fig. 6, the PTZ manual operation is not interrupted at any time during the period O625(a), and thus the processing proceeds to step S715.

In step S715 illustrated in Fig. 7, the CPU 201 performs PTZ manual control in the image capturing unit 210 of the network camera 110 to which the CPU 201 belongs based on a user operation related to PTZ (that is, the angle of view) via the video controller 120. For example, in the timing diagram for the network camera 2 (110-2) illustrated in Fig. 6, during the period O625(a), the CPU 201 performs PTZ manual control in the image capturing unit 210 of the network camera 110 to which the CPU 201 belongs, while identifying the tracking target subject.

In step S714 illustrated in Fig. 7, in a case where the CPU 201 determines that the PTZ manual operation by the user is not detected for the predetermined period of time and the PTZ manual operation is interrupted (YES in step S714), the processing proceeds to step S716.

In step S716 illustrated in Fig. 7, the CPU 201 sets the PTZ automatic tracking state 13 as the state of the network camera 110 to which the CPU 201 belongs. The CPU 201 that performs processing for setting the PTZ automatic tracking state 13 in step S716 constitutes a "second state setting unit" according to the first embodiment. The CPU 201 that performs the processing of steps S709 to S714 and S716 illustrated in Fig. 7 also constitutes a "control unit" according to the first embodiment.

In step S706 illustrated in Fig. 7, in a case where the CPU 201 determines that the network camera 110 to which the CPU 201 belongs is in the PTZ automatic tracking state 13 (YES in step S706), the processing proceeds to step S717.

In step S717 illustrated in Fig. 7, the CPU 201 determines whether the network camera 110 to which the CPU 201 belongs is selected as the predetermined image capturing apparatus (PGM).

In step S717 illustrated in Fig. 7, in a case where the CPU 201 determines that the network camera 110 is currently selected as the predetermined image capturing apparatus (PGM) (YES in step S717), the processing proceeds to step S718.

In step S718 illustrated in Fig. 7, the CPU 201 identifies a PTZ tracking target subject. The CPU 201 that performs processing for identifying the PTZ tracking target subject in step S718 constitutes the "identification unit" according to the first embodiment. Detailed processing in step S718 illustrated in Fig. 7 is similar to, for example, detailed processing in step S711 illustrated in Fig. 7 described above, and thus descriptions thereof are omitted.

After the processing of step S718 illustrated in Fig. 7 is finished, the processing proceeds to step S719. After the processing of step S716 illustrated in Fig. 7 is finished, the processing proceeds to step S719.

In step S719 illustrated in Fig. 7, the CPU 201 detects the PTZ tracking target subject from the video image obtained by the image capturing unit 210 of the network camera 110 to which the CPU 201 belongs, and controls at least one of pan, tilt, and zoom of the image capturing unit 210 so that the subject can be tracked.

In step S717 illustrated in Fig. 7, in a case where the CPU 201 determines that the network camera 110 to which the CPU 201 belongs is not selected as the predetermined image capturing apparatus (PGM) (NO in step S717), the processing proceeds to step S720.

In step S720 illustrated in Fig. 7, the CPU 201 sets the PTZ manual operation state 12 as the state of the network camera 110 to which the CPU 201 belongs. The CPU 201 that performs processing for setting the PTZ manual operation state 12 in step S720 constitutes the "first state setting unit" according to the first embodiment. When the processing of step S720 illustrated in Fig. 7 is finished, the processing proceeds to step S707.

In step S708 illustrated in Fig. 7, in a case where the CPU 201 determines that the PTZ operation is not being performed (NO in step S708), the processing proceeds to step S721.

In step S721 illustrated in Fig. 7, the CPU 201 sets the no-PTZ-operation state 11 as the state of the network camera 110 to which the CPU 201 belongs.

When the processing of step S721 illustrated in Fig. 7 is finished, the processing proceeds to step S722. After the processing of step S715 illustrated in Fig. 7 is finished, the processing proceeds to step S722. Further, when the processing of step S719 illustrated in Fig. 7 is finished, the processing proceeds to step S722.

In step S722 illustrated in Fig. 7, the CPU 201 determines whether to end the processing performed by the network camera 110 to which the CPU 201 belongs. In step S722 illustrated in Fig. 7, in a case where the CPU 201 determines not to end the processing performed by the network camera 110 to which the CPU 201 belongs (NO in step S722), the processing returns to step S702 and the processing of step S702 and subsequent steps are performed again.

In step S722 illustrated in Fig. 7, in a case where the CPU 201 determines to end the processing performed by the network camera 110 to which the CPU 201 belongs (YES in step S722), the processing in the flowchart illustrated in Fig. 7 ends.

A case will now be described in which the user interrupts the PTZ manual operation via the video controller 120 at time t625(b) in the timing diagram for the network camera 2 (110-2) illustrated in Fig. 6. Immediately after the user stops the PTZ manual operation at time t625(b), the PTZ control state 10 of the network camera 110 is in the PTZ manual operation state 12, and thus the processing reaches step S714 via "NO" in step S706, "YES" in step S707, and "YES" in step S710 illustrated in Fig. 7.

Next, an operation during the period O625(b) in the timing diagram for the network camera 2 (110-2) illustrated in Fig. 6 will be described. During the period O625(b), the network camera 110 is in the PTZ automatic tracking state 13 and is selected as the predetermined image capturing apparatus (PGM). Accordingly, the processing proceeds to step S719 via "YES" in step S706, "YES" in step S717, and step S718 illustrated in Fig. 7, and the PTZ automatic tracking control processing is repeatedly performed.

Next, a case will be described in which, in the timing diagram for the network camera 2 (110-2) illustrated in Fig. 6, a switching operation is performed by the switcher 130 at time t625(c) and the network camera 2 (110-2) is not selected as the predetermined image capturing apparatus (PGM). In this case, the processing proceeds to step S720 via "YES" in step S706 and "NO" in step S717 illustrated in Fig. 7, and the PTZ manual operation state 12 is set as the state of the network camera 2 (110-2). In other words, when the network camera 2 is not selected as the predetermined image capturing apparatus (PGM) by the switcher 130, the PTZ automatic tracking control is stopped. Thereafter, the processing in which PTZ control of the network camera 110 is not performed is repeated via "NO" in step S707, "NO" in step S708, and step S721 illustrated in Fig. 7.

In the processing of the flowchart illustrated in Fig. 7, a case where the tracking target subject is lost during the PTZ automatic tracking control is not illustrated. At this point of time, however, for example, the PTZ automatic tracking control may be stopped, or the network camera may be reset to a predetermined PTZ home position.

As described above, the network camera 110 according to the first embodiment is an image capturing apparatus including the image capturing unit 210, and the network camera 110 includes functions of the following units. The CPU 201 has the function of the first state setting unit for setting the PTZ manual operation state 12, which is a state in which at least one of pan, tilt, and zoom of the image capturing unit 210 is controlled based on a manual operation by the user in steps S709 and S720 illustrated in Fig. 7. The CPU 201 also has the function of the second state setting unit for setting the PTZ automatic tracking state 13 serving as a state for PTZ control of the image capturing unit 210 so as to track the subject detected from the video image obtained by the image capturing unit 210 in step S716 illustrated in Fig. 7. The CPU 201 also has the function of the control unit to control switching of the state of the network camera 110 to which the CPU 201 belongs, from the PTZ manual operation state 12 to the PTZ automatic tracking state 13, for example, in steps S709 to S714 and S716 illustrated in Fig. 7. Specifically, the function of the control unit is executed in a case where the network camera 110 to which the CPU 201 belongs is selected as the predetermined image capturing apparatus (PGM) (YES in step S710) and the manual operation by the user is not detected for the predetermined period of time (YES in step S714).

The network camera (image capturing apparatus) 110 according to the first embodiment described above makes it possible for the user to perform an appropriate operation in the case of performing an operation by switching the predetermined image capturing apparatus to deliver or record a video image among the plurality of network cameras 110-1 to 110-3.

In steps S711 and S718 illustrated in Fig. 7 and in step S802 illustrated in Fig. 8, the CPU 201 also has the function of the identification unit for identifying an object with a minimum amount of movement per unit time among a plurality of objects included in the video image obtained by the image capturing unit 210 as a tracking target subject. In step S711 illustrated in Fig. 7, CPU 201 also has the function of the identification unit for identifying the tracking target subject during a period in which the PTZ manual operation state 12 is set as the state of the network camera 110 to which the CPU 201 belongs.

In the network camera 110 according to the first embodiment, the CPU 201 performs the following processing. That is, in a case where selection of the network camera 110 to which the CPU 201 belongs as the predetermined image capturing apparatus (PGM) is cleared during a period in which the PTZ automatic tracking state 13 is set, the CPU 201 performs, in step S720 in Fig. 7, control to switch the state of the network camera 110 from the PTZ automatic tracking state 13 to the PTZ manual operation state 12.

Further, the image capturing system 100 according to the first embodiment includes the plurality of network cameras 110-1 to 110-3 corresponding to a plurality of image capturing apparatuses, and a control apparatus including the video controller 120 for controlling the plurality of image capturing apparatuses and the switcher 130. This control apparatus transmits, to the first image capturing apparatus, information indicating that a first image capturing apparatus (network camera 2 (110-2) illustrated in Fig. 6) has been selected from among the plurality of image capturing apparatuses as the predetermined image capturing apparatus (PGM), and sets the PTZ automatic tracking state 13 as the state of the first image capturing apparatus. In this case, the control apparatus performs control of changing a state of a second image capturing apparatus (e.g., the network camera 1 (110-1) illustrated in Fig. 6) different from the first image capturing apparatus among the plurality of image capturing apparatuses, to the PTZ manual operation state 12.

In the timing diagram for the network camera 2 (110-2) illustrated in Fig. 6, during the period P625, the PTZ operation for the video controller 120 within one cut can be smoothly taken over and the state can be switched to the PTZ automatic tracking state 13. In this case, once the PTZ control for the network camera 2 (110-2) is switched to the automatic tracking control, the user can change settings for the other network cameras 1 and 3 (110-1 and 110-3). The user can thereby change settings for image capturing conditions, including an angle of view or an exposure of the network camera 110 to be subsequently switched by the switcher 130.

While the first embodiment illustrates a configuration in which the PTZ automatic tracking control is stopped when the selection of the network camera 110 as the predetermined image capturing apparatus (PGM) is cleared during the period in which the network camera 110 is in the PTZ automatic tracking state 13, the present disclosure is not limited only to this configuration. For example, the present disclosure can also be applied to a configuration in which the PTZ automatic tracking control is continuously performed even when the selection of the network camera 110 as the predetermined image capturing apparatus (PGM) is cleared during the period in which the network camera 110 is in the PTZ automatic tracking state 13. In a case where the selection of the network camera 110 as the predetermined image capturing apparatus (PGM) is cleared, whether to continue or stop the PTZ automatic tracking control may be selected depending on the settings.

The object movement detection processing in step S705 illustrated in Fig. 7 need not necessarily be performed with a frequency (frame rate) for image capturing and development, and may be performed on a best effort basis or with a periodically reduced frequency.

As the automatic tracking target subject described in the first embodiment, at least one of a human body, a face, an animal, an aircraft, an automobile, and a train is suitably used, and may be designated by the user in advance.

### (Second Embodiment)

Next, a second embodiment will be described. In the second embodiment to be described below, descriptions of matters that are common to those in the first embodiment described above are omitted and only matters that are different from the matters in the first embodiment described above will be described.

A schematic configuration of an image capturing system according to the second embodiment is similar to the schematic configuration of the image capturing system 100 according to the first embodiment illustrated in Fig. 1. A hardware configuration and a functional configuration of the network camera (image capturing apparatus) 110 according to the second embodiment are similar to the hardware configuration and the functional configuration of the network camera (image capturing apparatus) 110 according to the first embodiment illustrated in Figs. 2 and 3, respectively. A hardware configuration of the switcher 130 according to the second embodiment is similar to the hardware configuration of the switcher 130 according to the first embodiment illustrated in Fig. 4.

In the first embodiment described above, once the network camera (image capturing apparatus) 110 is set to the PTZ automatic tracking state 13, the state of the network camera 110 cannot be returned to the PTZ manual operation state 12 in which the user performs an operation via the video controller 120 again during the period in which the network camera 110 is selected as the predetermined image capturing apparatus (PGM). In the second embodiment, a configuration in which the state of the network camera 110 can be returned from the PTZ automatic tracking state 13 to the PTZ manual operation state 12 again during the period in which the network camera 110 is being selected as the predetermined image capturing apparatus (PGM).

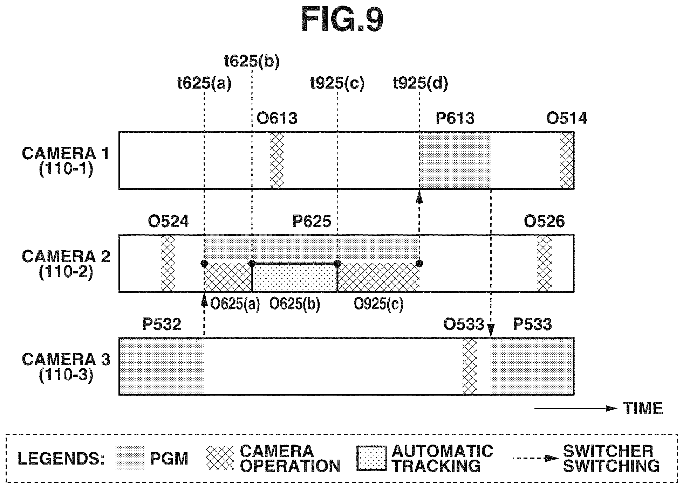

Fig. 9 illustrates an example of a timing diagram related to control of the plurality of network cameras 1 to 3 (110-1 to 110-3) according to the second embodiment. In Fig. 9, constituent elements similar to those illustrated in Figs. 5 and 6 are denoted by the same reference numerals or the like, and detailed descriptions thereof are omitted.

In the timing diagram for the network camera 2 (110-2) illustrated in Fig. 9, the PTZ automatic tracking state 13 is set during the period O625(b). Thereafter, when a PTZ instruction is started at time t925(c) illustrated in Fig. 9, a control operation for switching the state of the network camera 2 (110-2) from the PTZ automatic tracking state 13 to the PTZ manual operation state 12 is performed. In the timing diagram for the network camera 2 (110-2) illustrated in Fig. 9, the PTZ manual operation state 12 is set during a period O625(c) from time t925(c) to time t925(d).

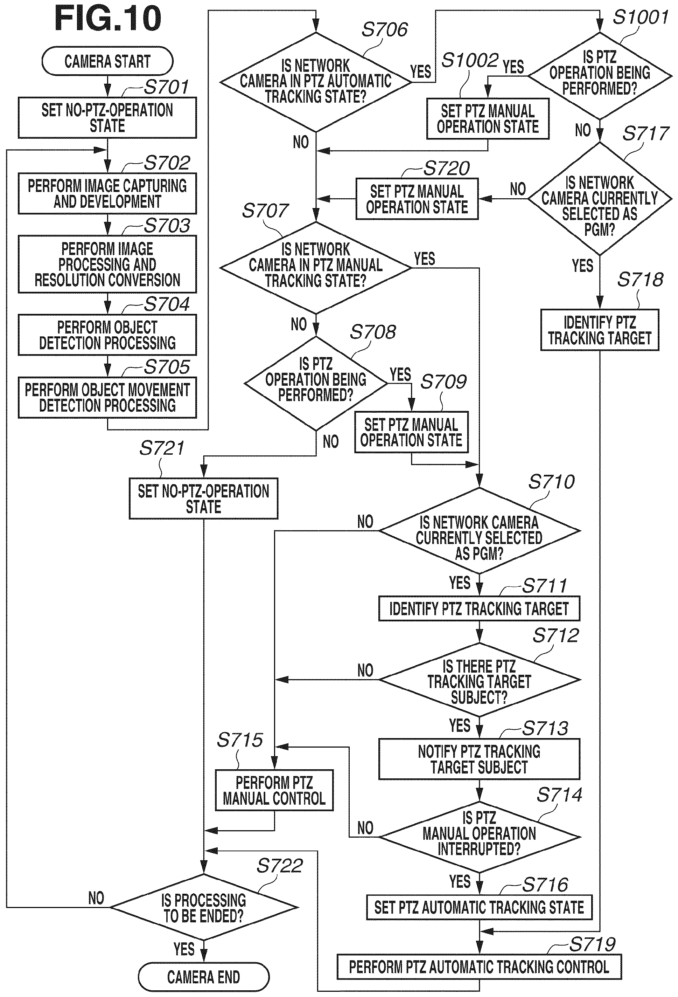

Fig. 10 is a flowchart illustrating an example of a processing procedure in a control method of the network camera (image capturing apparatus) 110 according to the second embodiment. Processing steps in the flowchart of Fig. 10 that are similar to the processing steps in the flowchart of Fig. 7 are denoted by the same step numbers, and detailed descriptions thereof are omitted. Specifically, the processing in the flowchart illustrated in Fig. 10 is processing in which steps S1001 and S1002 are added to the processing in the flowchart illustrated in Fig. 7.

In step S706 illustrated in Fig. 10, like in Fig. 7, the CPU 201 determines whether the network camera 110 is in the PTZ automatic tracking state 13.

In step S706 illustrated in Fig. 10, in a case where the CPU 201 determines that the network camera 110 is in the PTZ automatic tracking state 13 (YES in step S706), the processing proceeds to step S1001. For example, in the timing diagram for the network camera 2 (110-2) illustrated in Fig. 9, the PTZ automatic tracking state 13 is set at any time during the period O625(b), and thus the processing proceeds to step S1001.

In step S1001 illustrated in Fig. 10, the CPU 201 determines whether the PTZ manual operation by the user is detected (PTZ manual operation is being performed) based on information from the video controller 120.

In step S1001 illustrated in Fig. 10, in a case where the CPU 201 determines that the PTZ manual operation by the user is detected (PTZ manual operation is being performed) (YES in step S1001), the processing proceeds to step S1002.

In step S1002 illustrated in Fig. 10, the CPU 201 sets the PTZ manual operation state 12 as the state of the network camera 110 to which the CPU 201 belongs. The CPU 201 that performs processing for setting the PTZ manual operation state 12 in step S1002 constitutes the "first state setting unit" according to the present embodiment.

After the processing of step S1002 illustrated in Fig. 10 is finished, the processing proceeds to step S707 illustrated in Fig. 10.

The processing of step S707 and subsequent steps is performed in the same manner as in the processing illustrated in Fig. 7. Specifically, since the PTZ manual operation state 12 is set in step S1002 illustrated in Fig. 10, the processing proceeds to "YES" in step S707, "YES" in step S710, step S711, and step S712 in this order. Thereafter, the PTZ manual control in step S715 is performed while preparing for transition to the PTZ automatic tracking state 13 again.

In step S1001 illustrated in Fig. 10, in a case where the CPU 201 determines that the PTZ manual operation by the user has not been detected (PTZ manual operation is not being performed) (NO in step S1001), the processing proceeds to step S717. The processing of step S717 and subsequent steps are performed in the same manner as in the processing illustrated in Fig. 7.

In the network camera 110 according to the second embodiment, the CPU 201 performs a control operation for switching the state of the network camera 110 from the PTZ automatic tracking state 13 to the PTZ manual operation state 12 in a case where the PTZ manual operation by the user has been detected during the period in which the PTZ automatic tracking state 13 is set.

According to the second embodiment, even after the state of the network camera 110 has transitioned to the PTZ automatic tracking state 13, the state can be changed to the PTZ manual operation state 12 again when the PTZ manual operation by the user is detected, which makes it possible for the user to perform PTZ manual control of the image capturing unit 210.

### (Third Embodiment)

Next, a third embodiment will be described. In the third embodiment to be described below, descriptions of matters that are common to the matters in the first and second embodiments described above are omitted and only matters that are different from those in the first and second embodiments described above will be described.

A schematic configuration of an image capturing system according to the third embodiment is similar to the schematic configuration of the image capturing system 100 according to the first embodiment illustrated in Fig. 1. A hardware configuration and a functional configuration of the network camera (image capturing apparatus) 110 according to the third embodiment are similar to the hardware configuration and the function configuration of the network camera (image capturing apparatus) 110 according to the first embodiment illustrated in Figs. 2 and 3, respectively. A hardware configuration of the switcher 130 according to the third embodiment is similar to the hardware configuration of the switcher 130 according to the first embodiment illustrated in Fig. 4. Assume that, in the third embodiment, the video controller 120 illustrated in Fig. 1 also has a hardware configuration similar to the hardware configuration of the switcher 130 according to the first embodiment illustrated in Fig. 4.

The third embodiment illustrates a configuration in which an instruction to switch the state of the network camera 110 to the PTZ automatic tracking state 13 is issued from the video controller 120 to the network camera (image capturing apparatus) 110.

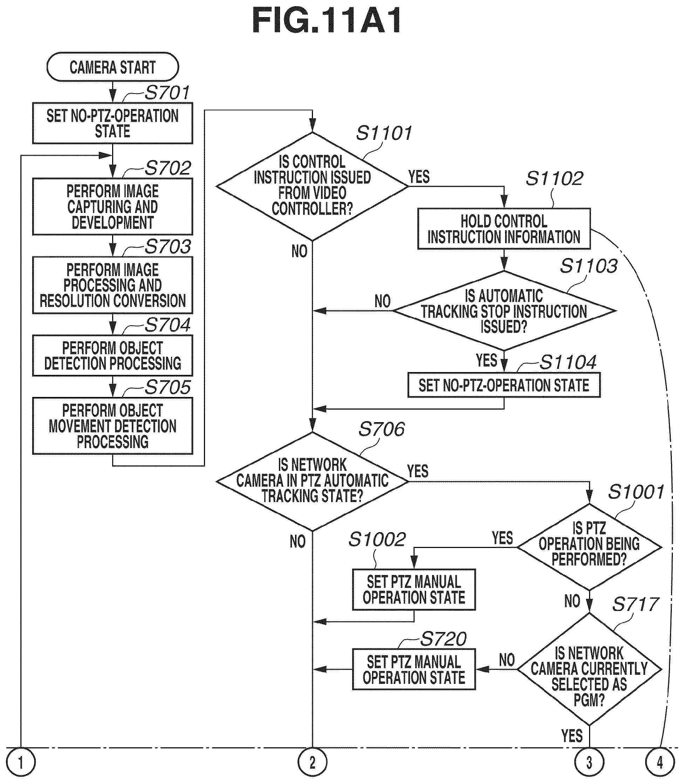

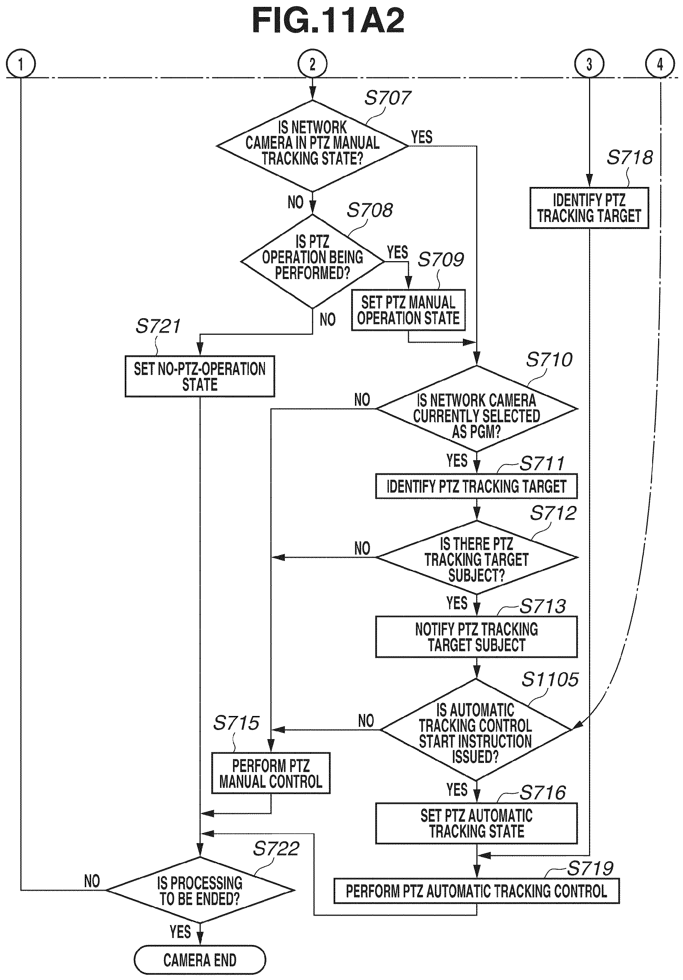

Figs. 11A1 and 11A2 are flowcharts illustrating an example of a processing procedure in a control method of the network camera (image capturing apparatus) 110 according to the third embodiment. In Figs. 11A1 and 11A2, processing steps similar to the processing steps in the flowcharts illustrated in Figs. 7 and 10 are denoted by the same step numbers, and detailed descriptions thereof are omitted.

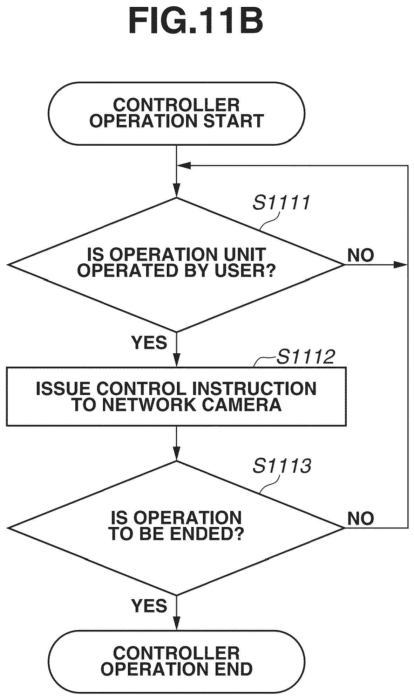

Fig. 11B is a flowchart illustrating an example of a processing procedure in a control method in the video controller 120 according to the third embodiment. In the third embodiment, the video controller 120 includes the buttons 124 for issuing an instruction to start or stop the PTZ automatic tracking control to the network camera 110.

In step S1111 illustrated in Fig. 11B, the CPU 401 of the video controller 120 determines whether the operation unit such as the buttons 124 or the joystick 123 is operated by the user. In step S1111 illustrated in Fig. 11B, in a case where the CPU 401 of the video controller 120 determines that the operation unit is not operated by the user (NO in step S1111), the CPU 401 waits in step S1111 until the operation unit is operated by the user.

In step S1111 illustrated in Fig. 11B, in a case where the CPU 401 of the video controller 120 determines that the operation unit is operated by the user (YES in step S1111), the processing proceeds to step S1112.

In step S1112 illustrated in Fig. 11B, the CPU 401 of the video controller 120 issues a control instruction based on the operation of the operation unit to the corresponding network camera 110.

After the processing of step S1112 illustrated in Fig. 11B is finished, the processing proceeds to step S1113.

In step S1113 illustrated in Fig. 11B, the CPU 401 of the video controller 120 determines whether to end the operation. In step S1113 illustrated in Fig. 11B, in a case where the CPU 401 of the video controller 120 determines not to end the operation (NO in step S1113), the processing returns to step S1111 and the processing of step S1111 and subsequent steps is performed again.

In step S1113 illustrated in Fig. 11B, in a case where the CPU 401 of the video controller 120 determines to end the operation (YES in step S1113), the processing in the flowchart illustrated in Fig. 11B ends.

Next, the flowchart illustrated in Figs. 11A1 and 11A2 will be described.

In the processing of the flowchart illustrated in Fig. 11A1, after the processing of step S705 similar to that illustrated in Fig. 7 is finished, the processing proceeds to step S1101.

In step S1101 illustrated in Fig. 11A1, the CPU 201 of the network camera 110 determines whether a control instruction has been issued from the video controller 120. In step S1101 illustrated in Fig. 11A1, in a case where the CPU 201 of the network camera 110 determines that the control instruction has not been issued from the video controller 120 (NO in step S1101), the processing proceeds to step S706. In step S706 illustrated in Fig. 11A1, the processing of step S706 and subsequent steps are performed in the same manner as in the processing illustrated in Fig. 10.

In step S1101 illustrated in Fig. 11A1, in a case where the CPU 201 of the network camera 110 determines that the control instruction has been issued from the video controller 120 (YES in step S1101), the processing proceeds to step S1102.

In step S1102 illustrated in Fig. 11A1, the CPU 201 of the network camera 110 holds control instruction information from the video controller 120, and executes the control instruction from the video controller 120 at an appropriate timing.

After the processing of step S1102 illustrated in Fig. 11A1 is finished, the processing proceeds to step S1103.

In step S1103 illustrated in Fig. 11A1, the CPU 201 of the network camera 110 determines whether the control instruction from the video controller 120 is an instruction to stop the PTZ automatic tracking control. In step S1103 illustrated in Fig. 11A1, in a case where the CPU 201 of the network camera 110 determines that the control instruction from the video controller 120 is not an instruction to stop the PTZ automatic tracking control (NO in step S1103), the processing proceeds to step S706. In step S706 illustrated in Fig. 11A1, the processing of step S706 and subsequent steps is performed in the same manner as in Fig. 10.

In step S1103 illustrated in Fig. 11A1, in a case where the CPU 201 of the network camera 110 determines that the control instruction from the video controller 120 is an instruction to stop the PTZ automatic tracking control (YES in step S1103), the processing proceeds to step S1104.

In step S1104 illustrated in Fig. 11A1, the CPU 201 of the network camera 110 sets the no-PTZ-operation state 11 as the state of the network camera 110. This stops the PTZ automatic tracking control for the network camera 110. After the processing of step S1104 illustrated in Fig. 11A1 is finished, the processing proceeds to step S706 and the processing of step S706 and subsequent steps are performed in the same manner as in the processing illustrated in Fig. 10.

After the processing of step S713 illustrated in Fig. 11A2 is finished, the processing proceeds to step S1105.

In step S1105 illustrated in Fig. 11A2, the CPU 201 of the network camera 110 determines whether the control instruction from the video controller 120 is an instruction to start the PTZ automatic tracking control.

In step S1105 illustrated in Fig. 11A1, in a case where the CPU 201 of the network camera 110 determines that the control instruction from the video controller 120 is an instruction to start the PTZ automatic tracking control (YES in step S1105), the processing proceeds to step S716. In step S716 illustrated in Fig. 11A2, the CPU 201 of the network camera 110 sets the PTZ automatic tracking state 13 as the state of the network camera 110 in the same manner as in the processing illustrated in Fig. 7. Thereafter, in step S719 illustrated in Fig. 11A2, the CPU 201 of the network camera 110 performs the PTZ automatic tracking control for the image capturing unit 210 so as to track the PTZ tracking target subject in the same manner as in the processing illustrated in Fig. 7.

The CPU 401 of the video controller 120 may automatically transmit a PTZ automatic tracking control start instruction to the network camera 110 at a timing when the PTZ operation is stopped at time t625(b) illustrated in Fig. 9. The CPU 401 of the video controller 120 may also automatically transmit a PTZ automatic tracking control stop instruction to the network camera 110 at a timing when the PTZ operation is started at time t925(c) illustrated in Fig. 9.

### (Fourth Embodiment)

Next, a fourth embodiment will be described. In the fourth embodiment to be described below, descriptions of matters that are common to those in the first to third embodiments described above are omitted and only matters that are different from the matters in the first to third embodiments will be described.

A schematic configuration of an image capturing system according to the fourth embodiment is similar to the schematic configuration of the image capturing system 100 according to the first embodiment illustrated in Fig. 1. A hardware configuration and a functional configuration of the network camera (image capturing apparatus) 110 according to the fourth embodiment are similar to the hardware configuration and the functional configuration of the network camera (image capturing apparatus) 110 according to the first embodiment illustrated in Figs. 2 and 3, respectively. A hardware configuration of the switcher 130 according to the fourth embodiment is similar to the hardware configuration of the switcher 130 according to the first embodiment illustrated in Fig. 4.

In the fourth embodiment, a case where the network camera 110 is not being selected as the predetermined image capturing apparatus (PGM) and the network camera 110 is to be selected as the predetermined image capturing apparatus (PGM) after PTZ automatic tracking is started during a manual operation via the video controller 120 will be described.

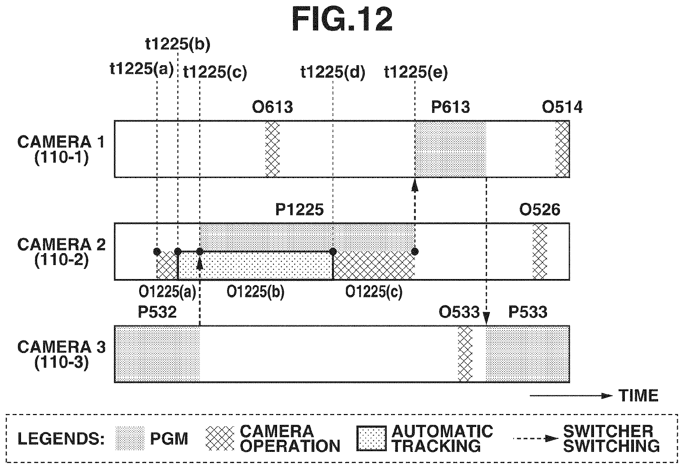

Fig. 12 illustrates an example of a timing diagram related to control of the plurality of network cameras 1 to 3 (110-1 to 110-3) according to the fourth embodiment. In Fig. 12, constituent elements similar to those illustrated in Figs. 5 and 6 are denoted by the same reference numerals or the like, and detailed descriptions thereof are omitted.

In the timing diagram for the network camera 2 (110-2) illustrated in Fig. 12, the angle of view, the exposure, and the like of the image capturing unit 210 are adjusted by a manual operation via the video controller 120 at time t1225(a). Specifically, the user performs a PTZ manual operation on the subject within the screen and also performs a tracking operation via the video controller 120 such that the position of the tracking target subject within the screen is not changed. The network camera 2 (110-2) performs object detection processing during a period in which the user performs the PTZ manual operation via the video controller 120, and identifies an object with a minimum amount of movement within the screen per unit time as the tracking target subject.

In the timing diagram for the network camera 2 (110-2) illustrated in Fig. 12, the network camera 2 (110-2) is set, at time t1225(b), to the PTZ automatic tracking state 13 and automatically tracks the tracking target subject described above. For example, time t1225(b) is time when the PTZ manual operation for the video controller 120 is suddenly stopped, or when the operation target network camera is switched to another network camera other than the network camera 2 (110-2).

At time t1225(b) illustrated in Fig. 12, the network camera 2 (110-2) is not selected as the predetermined image capturing apparatus (PGM). Thereafter, at time t1225(c), the network camera 2 (110-2) is selected as the predetermined image capturing apparatus (PGM), but PTZ automatic tracking is continued. The state of the network camera 2 (110-2) is then switched from the PTZ automatic tracking state 13 to the PTZ manual operation state 12 at time t1225(d) when the PTZ manual operation has been performed via the video controller 120 again.

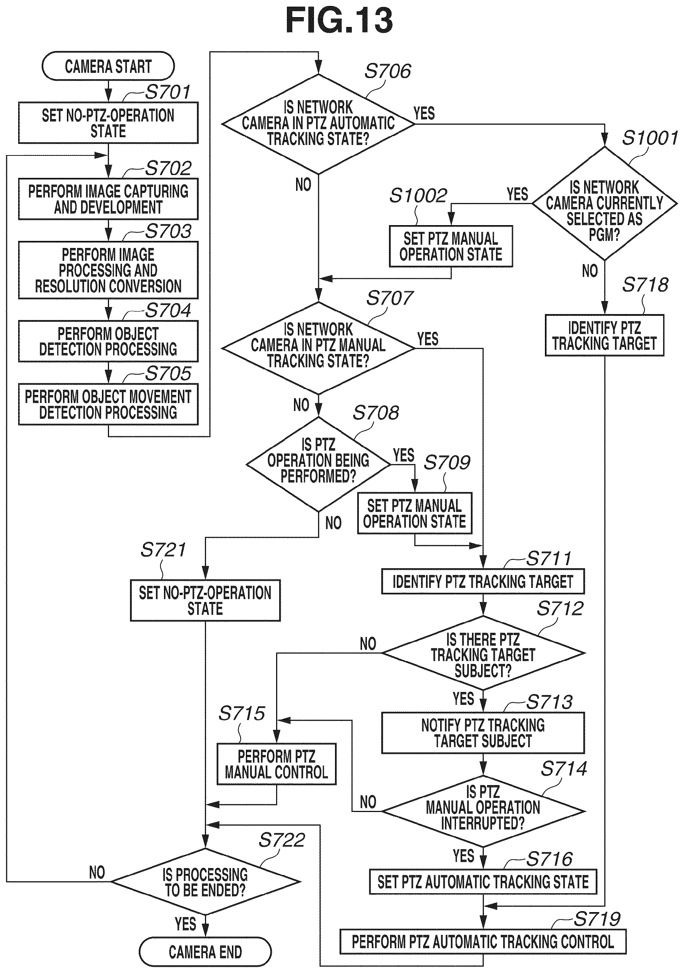

Fig. 13 is a flowchart illustrating an example of a processing procedure in a control method of the network camera (image capturing apparatus) 110 according to the fourth embodiment. In Fig. 13, processing steps similar to those in the flowchart illustrated in Fig. 10 are denoted by the same step numbers, and detailed descriptions thereof are omitted. Specifically, the processing in the flowchart illustrated in Fig. 13 is processing in which steps S710, S717, and S720 are omitted from the processing in the processing in the flowchart illustrated in Fig. 10.

When the PTZ manual operation is performed via the video controller 120 at time t1225(a) illustrated in Fig. 12, the processing proceeds to step S707 from step S706 in the flowchart illustrated in Fig. 13. At time t1225(a) illustrated in Fig. 12, the network camera 2 (110-2) is in the no-PTZ-operation state 11, and thus the processing proceeds to step S708 illustrated in Fig. 13. Since the PTZ manual operation has been started via the video controller 120, the processing proceeds to step S709 illustrated in Fig. 13 and the network camera 2 (110-2) is set to the PTZ manual operation state 12.

In step S711 illustrated in Fig. 13, the PTZ tracking target is identified. However, since there is no tracking history, it is determined that there is no tracking target in step S712 illustrated in Fig. 13 (NO in step S712), and thus the processing proceeds to step S715 illustrated in Fig. 13. In step S715 illustrated in Fig. 13, the network camera 2 (110-2) performs PTZ control according to the PTZ manual operation via the video controller 120.

Next, during a period O1225(a) illustrated in Fig. 12, the processing proceeds to step S707 from step S706 illustrated in Fig. 13. Since the PTZ manual operation state 12 is set in step S707, the processing proceeds to step S711 to identify the PTZ tracking target subject. In a case where the PTZ tracking target subject can be identified in step S711 illustrated in Fig. 13, the processing proceeds to step S713 from step S712. In step S713, the user is notified of the PTZ tracking target. Thereafter, in step S714 illustrated in Fig. 13, since the PTZ manual operation via the video controller 120 is continuously performed, the processing proceeds to step S715. In step S715, PTZ control is performed according to the PTZ manual operation via the video controller 120.

Next, when the PTZ manual operation via the video controller 120 is stopped at time t1225(b) illustrated in Fig. 12, in the flowchart illustrated in Fig. 13, the processing proceeds from step S706 to steps S707, S711, S712, S713, and S714. Since the PTZ manual operation via the video controller 120 has been interrupted, the processing proceeds from step S714 to step S716 so as to change the setting to the PTZ automatic tracking state 13. In step S719, PTZ automatic tracking control is performed.

Thereafter, during a period O1225(b) illustrated in Fig. 12, the PTZ automatic tracking control is performed while the processing proceeds to steps S706, S1001, S718, and S719 illustrated in Fig. 13.

Thereafter, at time t1225(d) illustrated in Fig. 12 when the PTZ manual operation via the network camera 2 (110-2) is started from the video controller 120 again, the processing proceeds from step S706 to step S1001 illustrated in Fig. 13. In this case, since the PTZ manual operation for the video controller 120 has been started, the processing proceeds to step S1002 illustrated in Fig. 13 and then processing similar to that at time t1225(a) illustrated in Fig. 12 is performed.

In the fourth embodiment described above, PTZ automatic tracking control for the network camera 2 (110-2) can be started before the network camera 2 (110-2) is selected as the predetermined image capturing apparatus (PGM).

While the present embodiment illustrates a configuration in which an operation performed via the video controller 120 is stopped from a state where PTZ tracking is performed via the video controller 120 and the network camera 2 (110-2) is set to the PTZ automatic tracking state 13, the present disclosure is not limited to this configuration. For example, the present disclosure can also be applied to a configuration in which, upon detection that the switcher 130 is preset (PST), the network camera 2 (110-2) is set to the PTZ automatic tracking state 13.

### (Other Embodiment)

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

This program and a computer-readable storage medium storing the program are included in the present disclosure.

The above-described embodiments are merely specific examples for carrying out the present disclosure. The present disclosure should not be interpreted in a limited way by the embodiments. That is, the present disclosure can be carried out in various forms without departing from the technical idea or the main features thereof.

The disclosure of the embodiments includes the following configurations, method, and program.

### [Configuration 1]

An image capturing apparatus including an image capturing unit, the image capturing apparatus including a first state setting unit configured to set a manual operation state serving as a state for controlling at least one of pan, tilt, and zoom of the image capturing unit based on a manual operation by a user, a second state setting unit configured to set an automatic tracking state serving as a state for controlling at least one of pan, tilt, and zoom of the image capturing unit to track a subject identified from a video image obtained by the image capturing unit, and a control unit configured to perform control to switch a state of the image capturing apparatus from the manual operation state to the automatic tracking state in a case where the image capturing apparatus is selected as a predetermined image capturing apparatus to perform at least one of delivery and recording of the video image and the manual operation by the user is not detected for a predetermined period of time during a period in which the manual operation state is set as the state of the image capturing apparatus.

### [Configuration 2]

The image capturing apparatus according to Configuration 1, in which the control unit performs control to switch the state of the image capturing apparatus from the automatic tracking state to the manual operation state in a case where selection of the image capturing apparatus as the predetermined image capturing apparatus is cleared during a period in which the automatic tracking state is set as the state of the image capturing apparatus.

### [Configuration 3]

The image capturing apparatus according to Configuration 1, in which the control unit performs control to switch the state of the image capturing apparatus from the automatic tracking state to the manual operation state in a case where the manual operation by the user is detected during a period in which the automatic tracking state is set as the state of the image capturing apparatus.

### [Configuration 4]

The image capturing apparatus according to Configuration 1, in which the control unit performs control to switch the state of the image capturing apparatus from the automatic tracking state to the manual operation state in a case where selection of the image capturing apparatus as the predetermined image capturing apparatus is cleared or the manual operation by the user is detected during a period in which the automatic tracking state is set as the state of the image capturing apparatus.

### [Configuration 5]

The image capturing apparatus according to any one of Configurations 1 to 4, further including an identification unit configured to identify an object with a minimum amount of movement per unit time among a plurality of objects included in the video image as the subject to be tracked.

### [Configuration 6]

The image capturing apparatus according to any one of Configurations 1 to 4, further including an identification unit configured to identify the subject during a period in which the manual operation state is set as the state of the image capturing apparatus.

### [Configuration 7]

The image capturing apparatus according to any one of Configurations 1 to 6, in which the subject is at least one of a human body, a face, an animal, an aircraft, an automobile, and a train.

### [Configuration 8]

An image capturing system including a plurality of image capturing apparatuses including an image capturing apparatus according to any one of Configurations 1 to 7, each of the plurality of image capturing apparatuses including the first state setting unit, the second state setting unit, and the control unit, and a control apparatus configured to perform control the plurality of image capturing apparatuses, in which the control apparatus performs control a state of a second image capturing apparatus different from a first image capturing apparatus among the plurality of image capturing apparatuses to be set to the manual operation state in a case where the control unit transmits information indicating that the first image capturing apparatus among the plurality of image capturing apparatuses is selected as the predetermined image capturing apparatus to perform at least one of delivery and recording of the video image and sets the state of the first image capturing apparatus to the automatic tracking state.

### [Method 1]

A control method of an image capturing apparatus including an image capturing unit, the control method including a first state setting step of setting a manual operation state serving as a state for controlling at least one of pan, tilt, and zoom of the image capturing unit based on a manual operation by a user, a second state setting step of setting an automatic tracking state serving as a state for controlling at least one of pan, tilt, and zoom of the image capturing unit to track a subject identified from a video image obtained by the image capturing unit, and a control step of performing control to switch a state of the image capturing apparatus from the manual operation state to the automatic tracking state in a case where the image capturing apparatus is selected as a predetermined image capturing apparatus to perform at least one of delivery and recording of the video image and the manual operation by the user is not detected for a predetermined period of time during a period in which the manual operation state is set as the state of the image capturing apparatus.

### [Program 1]

A program for causing a computer to function as each unit of an image capturing apparatus according to any one of Configurations 1 to 7.

According to the present disclosure, it is possible for a user to perform an appropriate operation in the case of performing an operation by switching a predetermined image capturing apparatus to deliver or record a video image among a plurality of image capturing apparatuses.

Various embodiments have been described in detail above but it will be understood that the present disclosure is not limited to these embodiments and encompasses all modifications, variants, alternatives and equivalents falling within the scope of the appended claims.

## Claims

1. A control apparatus comprising:
first state setting means (201) for setting a manual operation state for controlling at least one of pan, tilt, and zoom of an image capturing apparatus (210) based on a manual operation by a user;
second state setting means (201) for setting an automatic tracking state for controlling at least one of pan, tilt, and zoom of the image capturing apparatus to track a subject identified from a video image obtained by the image capturing apparatus; and
control means (201) for switching a state of the image capturing apparatus from the manual operation state to the automatic tracking state in a case where the image capturing apparatus is selected as a predetermined image capturing apparatus to perform at least one of delivery and recording of the video image and the manual operation by the user is not detected for a predetermined period of time in a period in which the manual operation state is set.

2. The control apparatus according to claim 1, wherein, in a case where selection of the image capturing apparatus (210) as the predetermined image capturing apparatus is cleared in a period in which the automatic tracking state is set, the state of the image capturing apparatus is switched from the automatic tracking state to the manual operation state.

3. The control apparatus according to claim 1, wherein, in a case where the manual operation is detected in a period in which the automatic tracking state is set, the state of the image capturing apparatus (210) is switched from the automatic tracking state to the manual operation state.

4. The control apparatus according to claim 1, wherein, in a case where selection of the image capturing apparatus (210) as the predetermined image capturing apparatus is cleared or the manual operation is detected in a period in which the automatic tracking state is set, the state of the image capturing apparatus is switched from the automatic tracking state to the manual operation state.

5. The control apparatus according to claim 1, further comprising identification means (201) for identifying an object with a minimum amount of movement per unit time among a plurality of objects included in the video image as the subject to be tracked.

6. The control apparatus according to claim 1, further comprising identification means (201) for identifying the subject in a period in which the manual operation state is set.

7. The control apparatus according to claim 1, wherein the subject is at least one of a human body, a face, an animal, an aircraft, an automobile, and a train.

8. The control apparatus according to claim 1, wherein, in a case where information indicating that a first image capturing apparatus among a plurality of image capturing apparatuses is selected as the predetermined image capturing apparatus is transmitted and the automatic tracking state is set, the control apparatus performs control to set a state of a second image capturing apparatus different from the first image capturing apparatus among the plurality of image capturing apparatuses to the manual operation state.

9. A control method comprising:
setting a manual operation state for controlling at least one of pan, tilt, and zoom of an image capturing apparatus based on a manual operation by a user;
setting an automatic tracking state for controlling at least one of pan, tilt, and zoom of the image capturing apparatus to track a subject identified from a video image obtained by the image capturing apparatus; and
in a case where the image capturing apparatus is selected as a predetermined image capturing apparatus to perform at least one of delivery and recording of the video image and the manual operation by the user is not detected for a predetermined period of time in a period in which the manual operation state is set, performing control to switch a state of the image capturing apparatus from the manual operation state to the automatic tracking state.

10. A program comprising instructions which, when the program is executed by a computer, cause the computer to carry out the control method of claim 9.
